# FASCICULE DE BREVET EUROPEEN

(11) **EP 2 079 631 B1**
(45) Date de publication et mention de la délivrance du brevet: **04.01.2012**
(21) Numéro de dépôt: 06831022.6
(22) Date de dépôt: 26.10.2006
(51) Int. Cl.: B62K 25/02, B62H 5/00

(54) **DISPOSITIF ANTIVOL - BLOCAGE RAPIDE DE PIECES DE VELO**
DIEBSTAHLSICHERUNGSSCHNELLVERRIEGELUNGSVORRICHTUNG FÜR FAHRRADTEILE
ANTITHEFT-QUICK LOCK DEVICE FOR BICYCLE PARTS

(43) Date de publication de la demande: 22.07.2009
(73) Titulaire: Tribout, Michel, 67000 Strasbourg (FR)
(72) Inventeur: Tribout, Michel, 67000 Strasbourg (FR)
(74) Mandataire: Munier, Laurent
(86) Numéro de dépôt international: PCT/FR2006/002408
(87) Numéro de publication internationale: WO 2008/049977

(56) Documents cités:
- EP-A- 0 853 034
- FR-A- 2 879 992
- FR-A- 2 885 344
- US-A- 5 319 992
- US-A- 5 526 661
- US-A- 5 813 258

## Description

La présente invention concerne un dispositif antivol de pièces de vélos. Elle est particulièrement adaptée aux blocages rapides montés sur les roues ou sur le tube de selle des vélos.

Plus particulièrement, le dispositif antivol - blocage rapide de pièces de vélos, roues et/ou tige de selle, les roues sont bloquées sur la fourche avant ou sur le hauban arrière par un système de blocage rapide du type levier solidaire d'un excentrique et au moins une tige à extrémité filetée recevant une rondelle d'appui et un écrou, ledit excentrique étant en appui et lié en rotation à ladite rondelle d'appui et ladite tige filetée traversant de part en part le moyeu de la roue de vélo.

Le vol des roues du vélo et de la tige de selle (tube portant la selle) est fréquent et pose un réel problème aux cyclistes. En plus du désagrément occasionné par le vol d'éléments importants du vélo, le cycliste est obligé de remplacer les pièces dérobées. Le vol de ces éléments du vélo est particulièrement facile et fréquent lorsque le vélo est équipé d'attaches rapides.

Pour éviter ceci , la mise en place dans l'attache rapide d'un dispositif interdisant l'ouverture de celle-ci est prévue.

Par les documents FR-A-2 879 992 et US-A-5 526 661, on connaît un dispositif antivol blocage rapide de pièces de vélo comprenant un levier solidaire d'un excentrique appuyant sur une rondelle d'appui.

Ce dispositif comprend une tige guidée dans une canalisation.

Quand le vélo est horizontal, le dispositif connu interdit à l'excentrique de tourner.

Les dispositifs existants pour tenter de régler ce problème, qu'ils soient à clé ou molette chiffrée pour code, sont peu utilisés car ils nécessitent soit le port permanent de la clé ou de mémoriser la combinaison. D'autre part, ils peuvent facilement être inefficaces, il suffit d'exercer une rotation du levier de blocage pour dévisser (le boulon) situé à l'autre extrémité de l'axe de la roue et ainsi libérer cette dernière.

Pour éviter le vol de la bicyclette, il est fortement conseillé d'attacher celle-ci à un point fixe à l'aide d'un moyen anti-vol de types connus (câbles,...) généralement des arceaux (ou épingles) sont mis à disposition des cyclistes comme point fixe. Dans ce cas, il est impossible de dresser le vélo à la verticale (+/- 90°) sur sa roue arrière.

Le retournement du vélo peut être possible en faisant coulisser l'antivol le long du tube de l'arceau, par contre, la mise en position du vélo dressé verticalement sur sa roue arrière est impossible compte tenu de la longueur du vélo.

Le problème posé à la présente invention consiste à interdire le vol des roues et/ou de la tige de selle.

Ceci est obtenu par le dispositif qui est constitué par au moins :
- Une canalisation de guidage d'au moins une bille, ladite canalisation étant percée borgne dans le levier suivant un angle obtus par rapport à l'axe longitudinal dudit levier
- Dans ledit axe un perçage débouchant par une première extrémité dans ladite canalisation et par sa deuxième extrémité orientée vers l'axe de rotation dudit levier présentant un épaulement formant logement élargi ;
- Un moyen de blocage réversible de l'excentrique par rapport à son pivot de l'axe de rotation, ledit moyen de blocage comprenant une tête élargie mobile dans le logement élargi et une tige guidée dans la canalisation allant jusqu'en butée sur la bille, un ressort placé entre la tête élargie et l'épaulement du perçage maintenant ledit moyen de blocage sur le pivot de l'axe de rotation :
   - dans la première position de travail, vélo en position horizontale (posé sur ses roues, blocage de l'excentrique) le dispositif est en position serrée, le moyen bloque et interdit par sa tête à l'excentrique de tourner autour du pivot,
   - un redressement du vélo en position sensiblement verticale, donc du levier déplaçant ledit moyen de blocage et ladite bille sous l'effet de la gravité, bille éloignée du perçage et première extrémité de ladite tige dans la canalisation libérant l'excentrique en deuxième position de travail.

Suivant d'autres caractéristiques du dispositif selon l'invention :
- La tête élargie présente un fraisage perpendiculaire sur chacune de ses faces libres ce qui permet trois positions de travail,
- La canalisation est fermée par une pièce dont la face intérieure dans ladite canalisation est positionnée légèrement plus basse que l'axe en première position de travail, la bille par gravité venant en contact de ladite face,
- l'extrémité de la tige du moyen de blocage est inclinée suivant l'axe de la canalisation,
- l'écrou présente une géométrie extérieure lisse en forme de dôme,
- le blocage rapide comprend deux rondelles d'appui, la première coopérant avec l'excentrique, la deuxième coopérant avec l'écrou, chaque rondelle présentant une excroissance se logeant entre les doigts de la fourche pour interdire la rotation,
- L'écrou présentant une surface crantée en cliquet appuie sur ladite deuxième rondelle,
- le levier est recourbé de manière à épouser le collier de serrage positionné sur le tube de selle, en particulier ledit collier présentant au niveau de sa partie ouverte pour la latitude de serrage deux perçages passant de fermeture du collier par la tige filetée, le deuxième perçage opposé au levier étant taraudé afin d'accueillir la partie filetée de la tige,
- la canalisation de guidage de la bille débouche à l'intérieur de la fourche de l'excentrique.

L'invention sera mieux comprise, grâce à la description ci-après, qui se rapporte à des modes de réalisation préférés, donnés à titre d'exemples non limitatifs, et expliqués avec référence aux dessins annexés, dans lesquelles
- La fig. 1 représente vu en élévation un vélo en position horizontale roues au sol attaché à un point fixe et présentant trois leviers en position horizontale donc verrouillé par le dispositif selon l'invention.
- La fig. 2 représente en élévation le vélo de la fig. 1 en position redressé verticalement sur sa roue arrière, présentant les trois leviers en position déverrouillée, verticale.

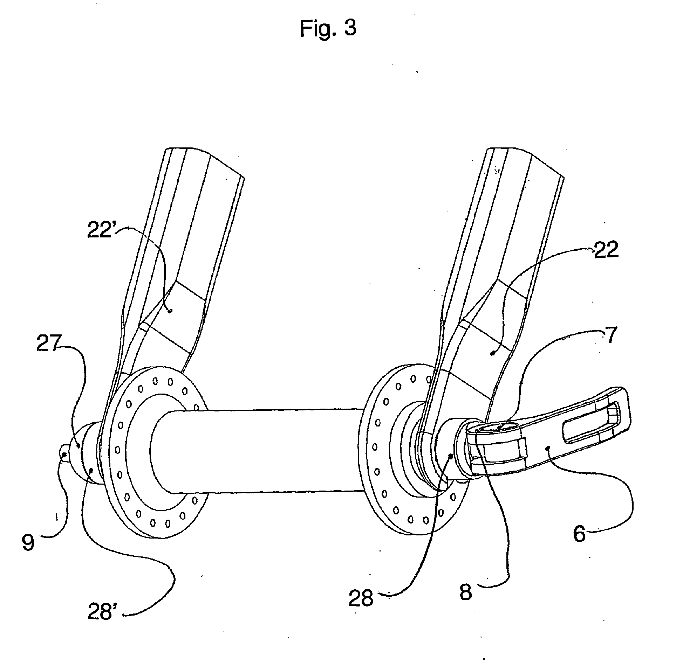

- La fig. 3 représente une vue en élévation du dispositif de blocage selon l'invention sur le moyeu de la fourche d'une roue avant de vélo correspondant aux Fig. 1 et 2.
- La fig. 4 représente une vue en coupe longitudinale du levier du dispositif de la fig. 3 quand le vélo est horizontal roues au sol.
- La fig. 5 représente une vue en coupe longitudinale du levier du dispositif de la fig. 3 quand le vélo est redressé verticalement sur sa roue arrière.
- La fig. 6 représente partiellement le dispositif de la fig. 1 vu en éclaté.
- La fig. 7 représente en élévation un mode de réalisation du dispositif avec deux rondelles d'appui.
- La fig. 8 représente en élévation une rondelle crantée du dispositif de la Fig. 10.
- Les fig. 9 et 10 représentent en élévation avec coupe partielle une variante du levier selon l'invention dans laquelle la canalisation de guidage de la bille débouche directement à l'intérieur de la fourche de l'excentrique.
- La fig. 11 représente une attache rapide de selle avec une variante de levier selon l'invention, levier recourbé pour épouser ledit collier.

Le dispositif antivol de pièces de vélo 1, roues 2 ou tige de selle 4 représenté sur les figures est situé dans le corps du levier 6 du blocage rapide appelé également attache rapide 5, il a pour but de permettre ou d'interdire la rotation de l'axe 7 actionnant l'excentrique 8 ; cet axe 7 relie le levier 6 à partir de sa partie excentrique 8 à la tige axiale de la roue 9.

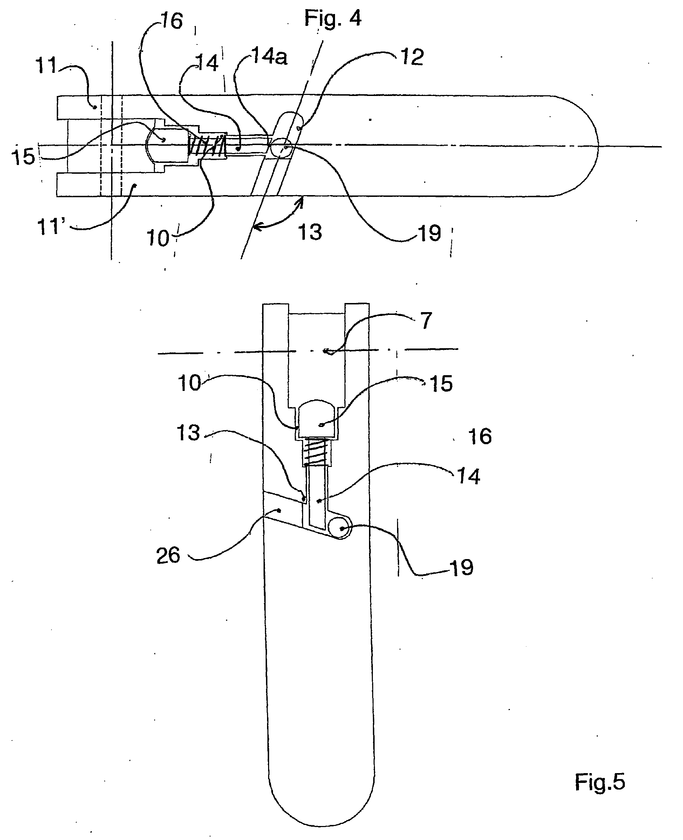

Il se compose d'un perçage débouchant 10 (Fig. 4, 5) effectué longitudinalement entre les deux doigts 11 de l'excentrique 8 en direction du centre de levier 6 et d'une canalisation de guidage 12 venant croiser le perçage 10 et formant un angle 13 avec celui-ci, une tige coulissante 14 munie d'une tête élargie d'appui 15 se déplace dans le perçage débouchant 10, cette tête élargie 15 sur la tige coulissante 14 est montée sur ressort 16 afin de maintenir celle-ci en appui permanent sur l'axe de rotation formé par la tête axiale 18 de la tige d'axe de roue 17,

Une bille mobile 19 libre, circule dans la canalisation de guidage 12 assurant dans une position particulière le blocage de la tête élargie 15 d'appui et dans une autre position la libre circulation de cette même tête d'appui 15.

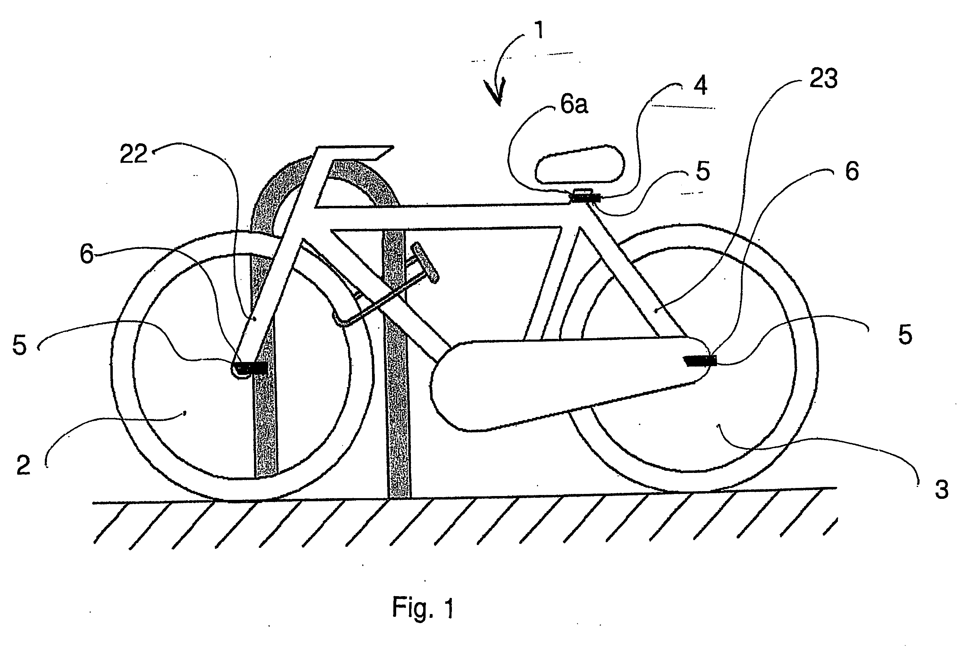

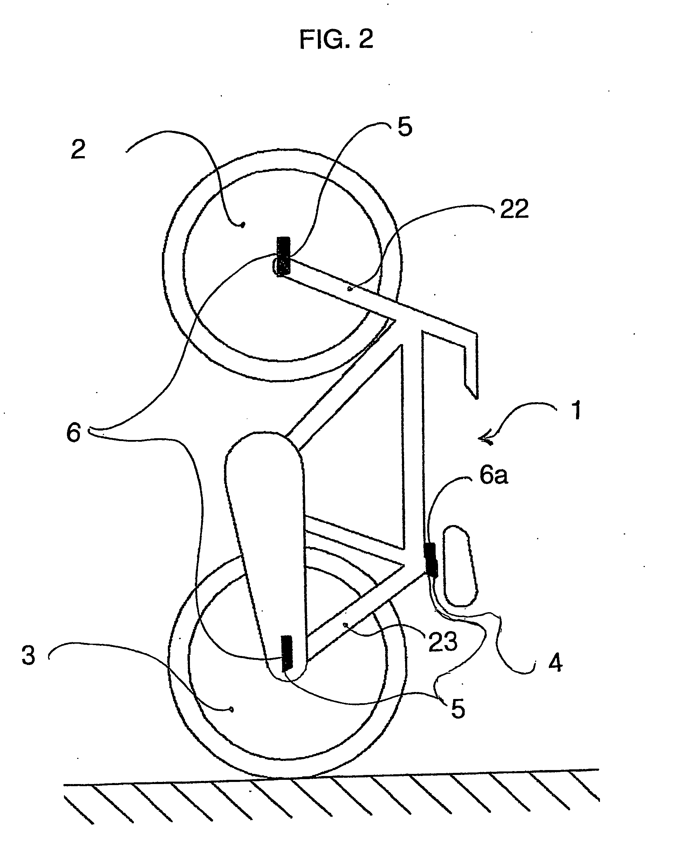

L'élément mobile constitué par la bille 19 se déplace dans la canalisation de guidage 12 selon que le vélo 1 se trouve en position habituelle sur ses deux roues 2 et 3 (Fig. 1) ou dressé verticalement sur sa roue arrière 3 (Fig. 2).

Selon le déplacement de la tige coulissante guidée 14 munie de sa tête élargie 15 sous la double contrainte du ressort de compression 16 placé sous la tête élargie 15 et rotation de la tête formatée 18 comprenant au moins un fraisage 20, la bille 19 circulera librement de par son poids dans sa canalisation de guidage 12 et devra rester libre de tout mouvement afin de remplir son rôle de blocage ou de liberté d'ouverture du levier 6.

Pour plus de clarté, voyons les deux positions essentielles du levier :
- Vélo 1 en position habituelle sur ses deux roues (Fig. 1 et 4) et attaché à un point fixe par un antivol de type connu, câble, articulé,... Lorsque le levier 6 est actionné ou fermé afin d'exploiter le serrage produit par l'excentrique 8, la tête élargie 15 de la tige guidée 14 vient en appui du fraisage 20 le plus prononcé effectué dans la tête de la tige axiale 18 de la roue, de ce fait, la tige guidée 14 et donc sa tête élargie 15 sous l'effet du ressort 16 de compression placée sous celle-ci se déplace en direction de l'axe de rotation de l'excentrique 7, ceci a pour effet de libérer suffisamment de place à la bille 19 dans sa canalisation de guidage 12 pour que celle-ci, par son simple poids, se déplace dans le prolongement de la tige guidée 14 sans toutefois être en pression avec la tige guidée 14.

En cas d'essai d'ouverture, la tige guidée 14 sous la pression exercée par la tentative de rotation de la tête de tige axiale fraisée 18 se déplacera légèrement en direction de la canalisation de guidage 12 et viendra en appui sur la bille 19 et ne pourra poursuivre son mouvement.

Pour plus d'efficacité, l'extrémité de la tige guidée 14 venant en appui sur la bille 19 présentera un angle 13 au moins équivalent à l'angle formé par le perçage débouchant 10 dans le levier 6 et la canalisation de guidage 12, ceci afin d'éviter que la bille 19 n'échappe sous la pression de la tige guidée 14 dans sa canalisation de guidage 12 et ne remplisse plus son rôle.

Dans cette position habituelle du vélo 1 sur ses deux roues 2, 3, les leviers des attaches rapides ou blocages rapides 5 sont fermés longitudinalement au vélo 1 et dans une position arrière par rapport à l'axe de rotation 7, ceci est une sécurité afin d'éviter tout objet ou tiges d'arbustes qui pourraient venir se placer entre le levier 6 et la fourche 22 ou l'étrier du vélo 22, 23.
- Lorsque le vélo 1 est dressé verticalement sur sa roue arrière 3 (Fig. 2 et 5), la bille 19 peut circuler librement sous l'effet de son propre poids dans la canalisation de guidage 12, la tige guidée 14 peut alors se déplacer jusque dans la canalisation de guidage 12 permettant la possibilité d'exercer la rotation du levier 6 avec l'excentrique 8, l'ouverture est donc possible.

La bille 19 pourra circuler librement dans la canalisation de guidage 12 entre la partie supérieure de la tige guidée 14 avancée en partie dans la canalisation de guidage 12 et l'extrémité de cette même canalisation de guidage.

Dans cette configuration, la tige guidée 14 avec sa tête élargie 15 est libre de mouvement, il est possible de dévisser le blocage ou attache rapide 5, il est possible de changer une roue 2, 3 ou de régler la hauteur de selle 4, de positionner par mouvement de vissage l'axe de la roue 17 ou de tige de selle 4 et ensuite de mettre en action l'excentrique 8 en refermant le levier 6.

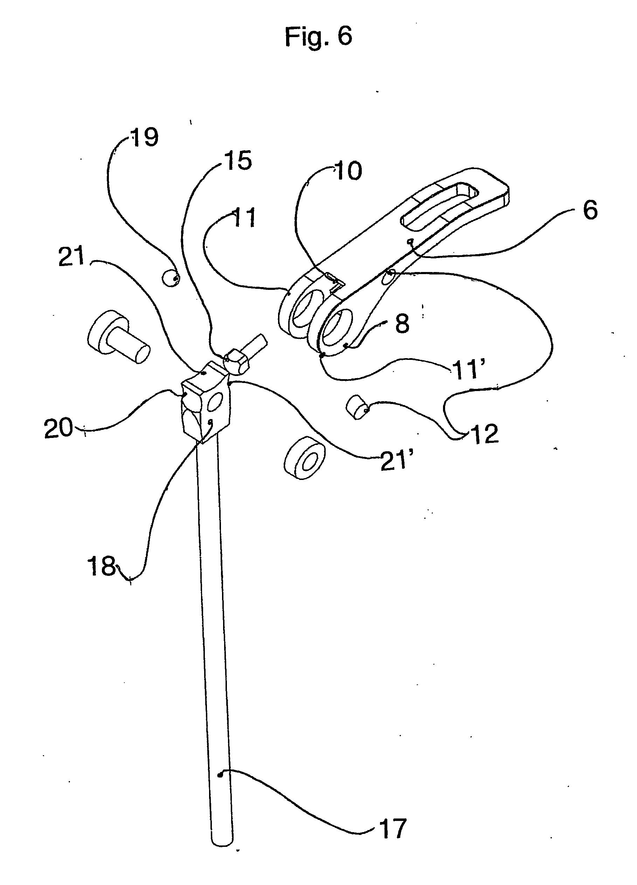

Un autre avantage de l'invention est de disposer de deux positions intermédiaires en plus de la position verrouillée (Fig. 6), ces deux positions intermédiaires facilitent grandement la manipulation du levier 6, ces deux positions comme celle de verrouillage sont obtenues sous le double effet du ressort 16 qui contraint la tête élargie 15 de la tige guidée 14 par pression sous la tête élargie 15 à venir se loger, deuxième effet, au maximum du fraisage 20 dans la tête de la tige axiale 18 de la roue 2 ou 3, cette tête formatée, fraisée 18 présente trois fraisages 20, 21, 21', un fraisage important 20 permettant à la tige guidée 14 d'avancer en direction de l'axe de rotation 7 sous l'effet du ressort de compression 16 libérant l'espace suffisant pour que la bille 19 prenne sa position en alignement de la tige guidée 14 dans sa canalisation de guidage 12, deux fraisages 21 et 21' plus légers permettant les positions intermédiaires en obligeant la bille 19, quelque soit la position du levier 6, de rester inactive dans sa canalisation de guidage 12, c'est-à-dire au dessous de la tige guidée 14.

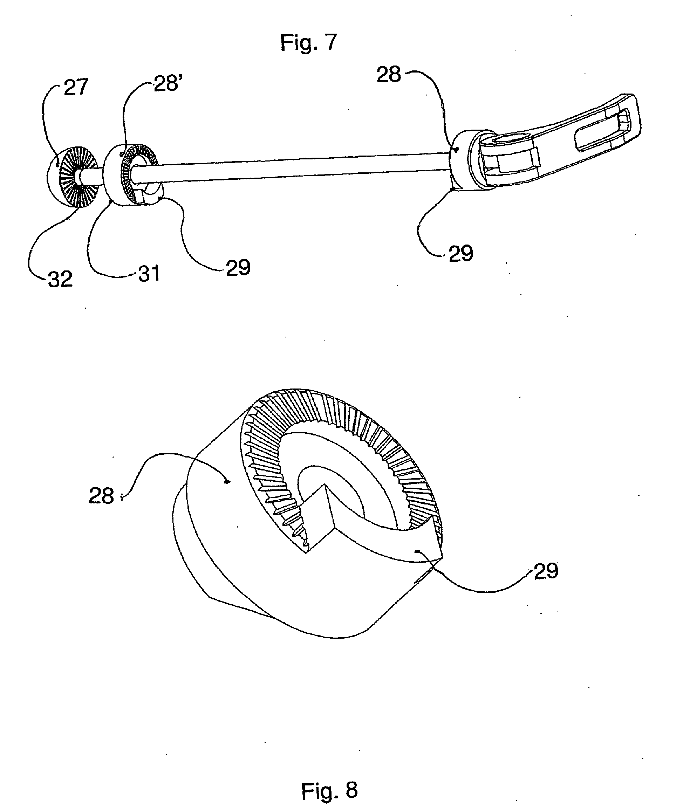

Pour être complètement efficace, le dispositif antivol roues pour attaches rapides doit être muni d'un écrou 27 (Fig. 7) présentant une géométrie extérieure lisse et en forme de dôme afin de rendre difficile la préhension avec un outil à main dans le but de revisser l'axe de la roue positionnée à l'opposé du levier 6 actionnant l'excentrique 8.

Dans le même but, deux rondelles d'appui 28, 28' présentant une excroissance 29 se logeant entre les doigts de la fourche 22, 22' pour interdire la rotation sont placées aux deux extrémités de la tige axiale 9 de la roue 2, 3, la première 28 (Fig. 8) coopère avec l'excentrique 8, la deuxième 28' coopère avec l'écrou lisse 27.

La rondelle d'appui 28' présente une surface crantée 31 en cliquet, cette surface crantée 31 vient au contact de la surface crantée 32 de l'écrou 27 en forme de dôme afin de permettre le vissage et d'interdire le dévissage lorsque le serrage est effectué par l'excentrique.

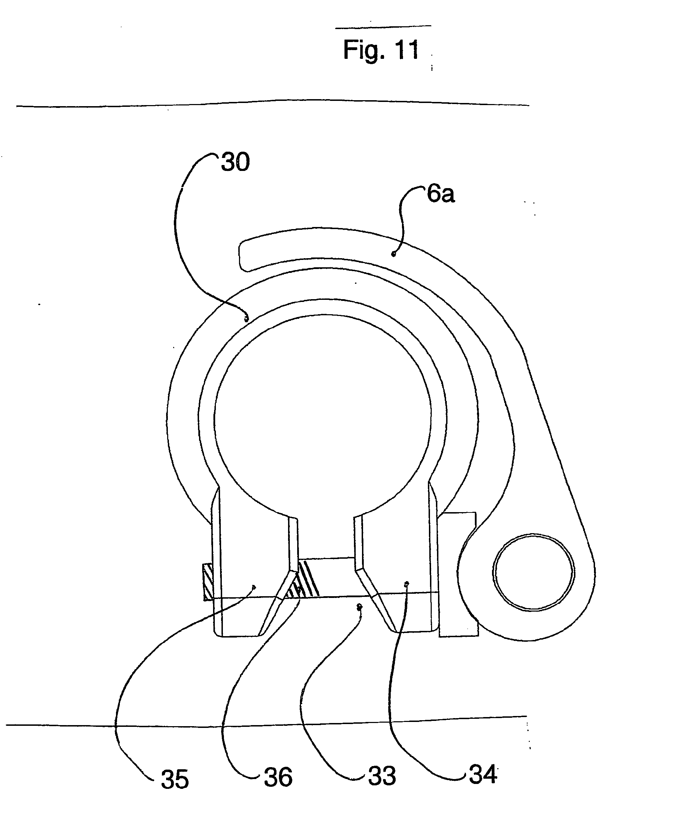

Pour le blocage rapide de selle (Fig.11) un mode de réalisation préféré est celui pour lequel le levier 6a est recourbé de manière à épouser le collier de serrage 30 positionné sur le tube de selle.

Cette forme de levier 6a enserrant le collier 30 interdit le dévissage lorsque l'attache rapide est fermée et en position verrouillée, c'est-à-dire le vélo sur ses deux roues. Le levier 6a lors d'une tentative de dévissage se heurterait à la tige de selle.

Ce collier de serrage 30 présente au niveau de sa partie ouverte 33 pour la latitude de serrage, deux perçages traversants 34 et 35 recevant la tige filetée 36. Le deuxième perçage 35 opposé au levier 6a est taraudé afin d'accueillir la partie filetée de la tige filetée 36.

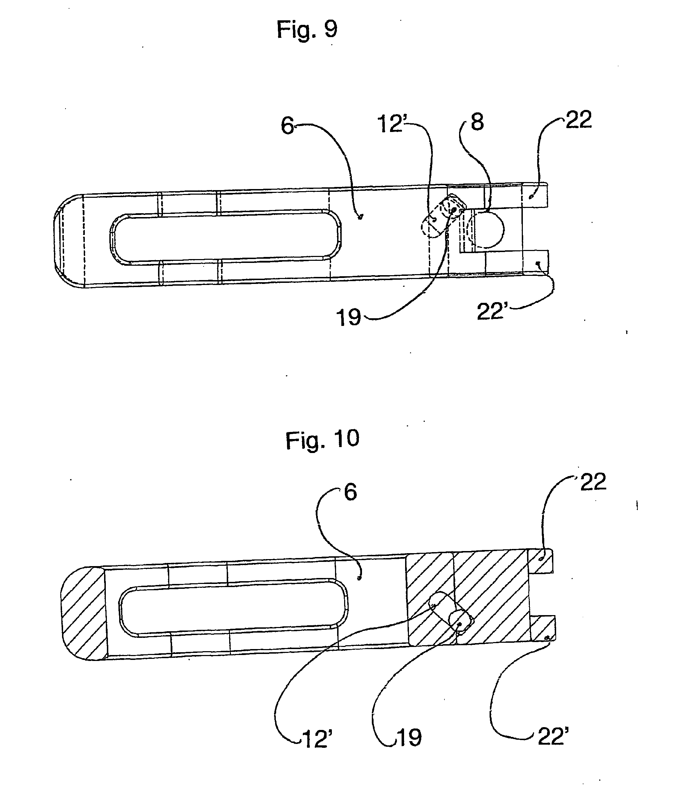

Selon un autre mode de réalisation (Fig. 9, 10), la canalisation 12' de guidage de la bille 19 débouche à l'intérieur de la fourche de l'excentrique 8.

Le fonctionnement reste identique à la seule différence que la bille 19 se déplace de sa canalisation de guidage 12' vers un perçage effectué dans l'axe de rotation 8.

Le mouvement de la bille 19 est assuré par son propre poids selon que le vélo est en position habituelle sur ses deux roues (Fig. 1) ou dressé verticalement sur sa roue arrière (Fig. 2).

Signes de référence
- 1.: Vélo
- 2.: Roue avant
- 3.: Roue arrière
- 4.: Tige de selle
- 5.: Attache rapide ou blocage rapide
- 6.: Levier
- 6a.: Levier
- 7.: Axe de l'excentrique
- 8.: Excentrique
- 9.: Tige axiale de la roue
- 10.: Perçage débouchant
- 11.: Doigts de l'excentrique
- 11'.: Doigts de l'excentrique
- 12.: Canalisation de guidage
- 12'.: Canalisation de guidage
- 13.: Angle (perçage débouchant/canalisation de guidage)
- 14.: Tige coulissante guidage
- 14a.: Extrémité de la tige
- 15.: Tête élargie
- 16.: Ressort
- 17: Tige axiale de roue
- 18: Tête axiale de la tige d'axe de roue
- 19: Bille
- 20: Fraisage le plus important
- 21: Fraisage moins important
- 21': Fraisage moins important
- 22: Fourche
- 22': Fourche
- 23: Etrier
- 24: Point fixe
- 25: Cadenas fermant la
- 26: Pièce canalisation de guidage
- 27: Ecrou dôme
- 28: Rondelle crantée avec excroissance
- 29: Excroissance
- 30: Collier de serrage
- 31: Surface crantée de la rondelle avec excroissance
- 32: Surface crantée de l'écrou
- 33: Partie ouverte du collier de serrage
- 34: Perçage passage de tige de serrage
- 35: Perçage taraudé
- 36: Tige filetée

Les signes de référence insérés après les caractéristiques techniques mentionnées dans les revendications ont pour seul but de faciliter la compréhension de ces dernières et n'en limitent aucunement la portée.

Bien que l'invention ait été décrite en liaison avec des structures particulières, elle n'y est nullement limitée et on peut y apporter de nombreuses variantes.

Les combinaisons des différents modes de réalisation représentées sur les figures, ou décrits ci-dessus ne sortent pas du cadre de l'invention.

## Revendications

1. Dispositif antivol-blocage rapide de pièces de vélo (1), roues (2) et/ou tige de selle (4), les roues étant bloquées sur la fourche avant ou sur le hauban arrière par un système de blocage rapide d'un levier (6) solidaire d'un excentrique (8) et d'au moins une tige (17) a extrémité filetée recevant une rondelle d'appui et un écrou, ledit excentrique (8) étant en appui et lié en rotation à ladite rondelle d'appui et ladite tige filetée traversant de part en part le moyeu de la roue de vélo, **caractérisé en ce qu'**il est constitué par au moins :
- une canalisation de guidage (12) contenant au moins une bille (19) ladite canalisation étant percée borgne dans le levier (6) suivant un angle obtus (13) par rapport à l'axe longitudinal dudit levier et bouchée par une pièce fermant la canalisation de guidage (26)
- un perçage débouchant (10) ouvert par une première extrémité dans la canalisation (12) et par sa deuxième extrémité orientée vers l'axe de rotation (7) dudit levier (6) et présentant un épaulement formant logement élargi,
- un moyen de blocage réversible de l'excentrique (8), ledit moyen de blocage comprenant une tête élargie (15) coulissant dans le logement élargi du perçage débouchant (10) et une tige (14) guidée dans le perçage débouchant (10) un ressort placé entre la tête élargie (15) et l'épaulement maintenant ledit moyen de blocage en contact constant avec le pivot de l'axe de rotation dudit levier (6) :
dans la première position de travail, vélo en position sur
ses roues (Fig. 1) le disposttif est en position serrée, le moyen de blocage réversible bloqué en translation par la bille (19) appuyant sur l'extrémité inclinée de la tige guidée (14) bloque et interdit par l'intermédiare de sa tête à l'excentrique de tourner autour du pivot suivant l'axe de rotation (7) dudit levier (6), ledit moyen de blocage étant réversible lors d'
un redressement du vélo en position sensiblement verticale (Fig.2), donc du levier (6) déplaçant ledit moyen de blocage et ladite bille (19) sous l'effet de la gravité, bille (19) qui sous l'effet de la gravité du perçage débouchant (10) libérant la tige (14) et permettant de ce fait la rotation du levier (6) sur l'axe (7) de rotation.

2. Dispositif selon la revendication 1 dans lequel la tête élargie (15) présente un fraisage perpendiculaire sur chacune de ses faces libres.

3. Dispositif selon l'une des revendications précédentes dans lequel la canalisation de guidage (12) fermée par une pièce (26) dont la face intérieure dans ladite canalisation est positionnée légèrement en retrait par rapport à l'alésage du perçage débouchant (10) en première position de travail (Fig.1), la bille (19) par gravité venant en contact de ladite face.

4. Dispositif selon l'une des revendications précédentes dans lequel l'extrémité (14a) de la tige du moyen de blocage est inclinée suivant l'axe de la canalisation (12).

5. Dispositif selon l'une des revendications précédentes dans lequel l'écrou (27) présente une géométrie extérieure lisse en forme de dôme.

6. Dispositif selon l'une des revendications précédentes dans lequel le blocage rapide comprend deux rondelles d'appui, (28, 28') la première (28) coopérant avec l'excentrique, la deuxième (28') coopérant avec l'écrou(27), chaque rondelle présentant une excroissance (29) apte à se loger entre les doigts de la fourche pour interdire la rotation.

7. Dispositif selon la revendication précédente dans lequel l'écrou (27) présentant une surface (32) crantée en cliquet appuie sur ladite deuxième rondelle (28).

8. Dispositif selon l'une des revendications précédentes dans lequel le levier (6a) est recourbé de manière à épouser un collier de serrage positionné sur un tube de selle, en particulier ledit collier présentant au niveau de sa partie ouverte pour la latitude de serrage deux perçages traversants (34, 35) de fermeture du collier recevant la tige filetée (36), le deuxième perçage (35) taraudé accueille la partie filetée de la tige filetée (36).

9. Dispositif selon l'une des revendications précédentes dans lequel la canalisation (12') de guidage de la bille (19) débouche à l'intérieur de la fourche de l'excentrique (8).

## Claims

1. Anti-theft and rapid blocking device for bicycle parts (1), wheels (2) and/or seat tube (4), the wheels being blocked on the front fork or the seat stays by means of a system of rapidly blocking a lever (6) integral with an eccentric (8) and at least one rod (17) with a threaded end receiving a thrust washer and a nut, the said eccentric resting on and connected in rotation to the said thrust washer and the said threaded rod passing through the hub of the bicycle wheel, **characterised in that** it comprises at least:
- a guide channel (12) containing at least one ball (19) the said channel being a non-through hole drilled in the lever (16) at an obtuse angle (13) in relation to the longitudinal axis of the said lever and plugged by a part closing off the guide channel (26).
- a through hole (10) opening at one end into the channel (12) and with its second end oriented towards the axis of rotation (7) of the said lever (6) and including a shoulder forming a wider housing
- a reversible means of blocking the eccentric (8), the said blocking means comprising a wider head (15) sliding in the wider housing of the through hole (10) and a rod guided in the through hole (10)
- a spring placed between the wider head (15) and the shoulder holding the said blocking means in constant contact with the pivot of the axis of rotation of the said lever (6):
- in the first working position, with the bicycle on its wheels (Fig. 1), the device is in the tightened position and the reversible blocking means blocked in its translational movement by the ball (19) pressing on the angled end of the guided rod blocks and prevents, by means of its head, the eccentric from rotating around the pivot following the axis of rotation (7) of the said lever (6), the said blocking means being reversible when the bicycle is placed in a substantially vertical position, and therefore also the lever (6) moving the said blocking means and the said ball (19) by gravity, the ball (19) by the effect of gravity moving away from the through hole (10) freeing the rod (14) and thereby enabling the lever (6) to rotate on the axis (7) of rotation.

2. Device according to claim 1 in which the wider head (15) has a perpendicular milled surface on each of its free sides.

3. Device according to one of the previous claims in which the guide channel (12) is closed off by a part (26) whose inner face in the said channel is positioned slightly back from the bore of the through hole (10) in the first working position (Fig. 1), with the ball coming by force of gravity into contact with the said face.

4. Device according to one of the previous claims in which the end (14a) of the rod of the blocking means is angled to match the axis of the channel (12).

5. Device according to one of the previous claims in which the nut (27) has an outer geometry that is smooth and in the shape of a dome.

6. Device according to one of the previous claims in which the rapid blocking system includes two thrust washers (28, 28'), the first (28) cooperating with the eccentric, the second (28') cooperating with the nut (27), each washer having an excrescence (29) able to lodge itself between the arms of the fork to prevent the rotation.

7. Device according to the previous claim in which the nut (27) with a notched surface (32) like a ratchet presses on the said second washer (28).

8. Device according to one of the previous claims in which the lever (6a) is curved so that it follows the form of a clamp positioned on a saddle tube, the said clamp including in particular in its part that is open to adjust the clamping width two through holes (34, 35) for closing the clamp receiving the threaded rod (36), the second, threaded hole (35) receiving the threaded part of the threaded rod (36).

9. Device according to one of the previous claims in which the guide channel (12) of the ball (19) opens inside the fork of the eccentric (8).

## Patentansprüche

1. Diebstahlsicherungs-Schnellverschlussvorrichtung für Fahrradteile (1), Räder (2) und/oder Sattelstange (4), wobei die Räder an der Vordergabel oder auf der hinteren Verankerung durch ein Schnellverschlusssystem mit einem Hebel (6) blockiert sind, der mit einem Exzenter (8) fest verbunden ist, und mit wenigstens einer Stange (17) am Gewindeende, das eine Unterlegscheibe und eine Mutter aufnimmt, wobei der Exzenter (8) an der Unterlegscheibe anliegt und mit dieser drehbar verbunden ist und der Gewindebolzen die Radnabe des Fahrrads von einer Seite zur anderen durchquert, **dadurch gekennzeichnet, dass** diese gebildet wird durch wenigstens:
- einen Führungskanal (12) mit wenigstens einer Kugel (19), wobei der Kanal blind in den Hebel (6) eindringt, mit einem stumpfen Winkel (13) in Bezug zur Längsachse des Hebels und in einem Stück endet, welches den Führungskanal (26) schließt,
- eine Bohrung (10), die an einem ersten Ende offen in den Kanal (12) mündet und mit ihrem zweiten Ende in Richtung der Drehachse (7) des Hebels (6) ausgerichtet ist und eine Schulter aufweist, welche eine vergrößerte Aufnahme bildet,
- ein reversibles Exzenter-Verriegelungsmittel (8), wobei das Verriegelungsmittel einen vergrößerten Kopf (15) aufweist, der sich in der vergrößerten Aufnahme der Mündungsbohrung (10) verschiebt und mit einem Schaft (11), der in der Mündungsbohrung (10) geführt ist, wobei eine zwischen dem vergrößerten Kopf (15) und der Schulter angeordnete Feder das Verriegelungsmittel in konstantem Kontakt mit dem Gelenk der Drehachse des Hebels (6) hält:
in der ersten Arbeitsposition, Fahrrad in einer Position auf seinen Rädern (Fig. 1), ist die Vorrichtung in einer verriegelten Position, wobei das reversible Verriegelungsmittel, das translatorisch durch die Kugel (19) blockiert ist, an dem schrägen Ende des geführten Schafts (14) anstößt, blockiert und mithilfe seines Kopfes am Exzenter daran gehindert ist, sich um das Gelenk zu drehen, um der Drehachse (7) des Hebels (6) zu folgen, wobei das Verriegelungsmittel reversibel ist, wenn das Fahrrad in einer im Wesentlichen vertikalen Position (Fig. 2) aufgerichtet ist, wobei der Hebel (6) dann das Verriegelungsmittel und die Kugel (19) unter Einfluss der Schwerkraft verschiebt,
wobei die Kugel (19) unter Einfluss der Schwerkraft der Mündungsbohrung (10) den Schaft (14) freigibt und somit die Drehung des Hebels (6) um die Drehachse (7) erlaubt.

2. Vorrichtung nach Anspruch 1, in welcher der vergrößerte Kopf (15) eine senkrechte Fräsung auf jeder seiner freien Flächen aufweist.

3. Vorrichtung nach einem der vorhergehenden Ansprüche, in welcher der Führungskanal (12), der durch ein Stück (26) verschlossen ist, dessen Innenfläche in dem Kanal ein wenig zurückversetzt in Bezug zu der Lage der Mündungsbohrung (10) in der ersten Arbeitsposition (Fig. 1) der Kugel (19) ist, die durch Schwerkraft in Kontakt mit der Fläche kommt.

4. Vorrichtung nach einem der vorhergehenden Ansprüche, in welcher das Ende (14a) des Schafts des Verriegelungsmittels in Richtung der Kanalachse (12) geneigt ist.

5. Vorrichtung nach einem der vorhergehenden Ansprüche, in welcher die Mutter (27) eine äußere glatte Geometrie in Form einer Wölbung aufweist.

6. Vorrichtung nach einem der vorhergehenden Ansprüche, in welcher der Schnellverschluss zwei Unterlegscheiben (28, 28') umfasst, wobei die erste (28) mit dem Exzenter zusammenwirkt, die zweite mit der Mutter (27) zusammenwirkt, wobei jede Scheibe eine Ausstülpung (29) aufweist, die so ausgebildet ist, dass diese zwischen den Fingern der Gabel angeordnet werden kann, um die Drehung zu unterbinden.

7. Vorrichtung nach dem vorhergehenden Anspruch, in welcher die Mutter (27) eine Oberfläche (32) aufweist, die mit einer Rastung für eine Klickverbindung auf der zweiten Scheiben (28) aufweist.

8. Vorrichtung nach einem der vorhergehenden Ansprüche, in welcher der Hebel (6a) so gekrümmt ist, dass sich dieser an einen Verriegelungskragen anschmiegt, der auf einem Sattelrohr positioniert ist, insbesondere weist der Kragen an seinem offenen Teil für die Verriegelungshöhe zwei Schließ-Durchgangsbohrungen (34, 35) des Kragens auf, welche die Gewindestange (36) aufnehmen, wobei der zweite Durchgang (35) den Gewindeteil des Gewindeschafts (36) aufnimmt.

9. Vorrichtung nach einem der vorhergehenden Ansprüche, in welcher der Kanal (12') zur Führung der Kugel (19) im Inneren der Exentergabel (8) mündet.
